# EUROPEAN PATENT APPLICATION

(11) **EP 1 859 861 A1**
(43) Date of publication of application: **28.11.2007**
(21) Application number: 06729186.4
(22) Date of filing: 15.03.2006
(51) Int. Cl.: B01J 23/42, B01J 23/652

(54) **CATALYST FOR REMOVING OXYGEN AND METHOD FOR REMOVING OXYGEN USING THE CATALYST**

(30) Priority: 18.03.2005 JP 2005079107
(71) Applicant: Nippon Shokubai Co.,Ltd., Osaka-shi, Osaka 541-0043 (JP)
(72) Inventor: IKEDA, Mitsuaki, 4 (JP); YOSHINO, Kazunori, Hyogo 6700012 (JP); IKENOGAMI, Toshikatsu, o, Ibo-gun, Hyogo, 6711535 (JP); MORITA, Atsushi, Hyogo 655-0046 (JP)
(74) Representative: Orton, Erica Louise
(86) International application number: PCT/JP2006/305165
(87) International publication number: WO 2006/100987

(57) **Abstract**

Provided is a catalyst for reducing and decomposing oxygen in gas, highly efficiently and stably in from a low temperature region to a relatively high temperature region, in the presence of a reducing substance, containing at least one kind of a metal oxide selected from the group consisting of Ti, Si, W, Mo, Zr and Fe, as a catalyst component A; and at least one kind of a metal selected from the group consisting of Pt, Pd, Rh, Ir, Ru, Ni and Co, and/or a metal oxide thereof, as a catalyst component B; in removing oxygen, presence of a reducing substance in gas is effective.

## Description

### Technical Field

The present invention relates to a catalyst for removing trace amount of oxygen contained in raw material gas such as carbon dioxide, hydrogen, nitrogen, argon, helium, ammonia, carbon monoxide or the like, by using a reducing substance such as hydrogen, and a method for removing oxygen using the same catalyst.

### Background Art

Usually, in the case of removing oxygen in gas, a reaction is carried out by the addition of hydrogen in an amount of two or more volume times, and using a general Pt/alumina catalyst or a Pd/alumina catalyst. For example, in JP-A-6-182,136, JP-A-7-206,408, US5204075A, EP0509871A1, JP-A-8-217,422, EP0089830B1, JP-A-58-190,801, JP-A-58-174,239, JP-A-58-3,640, JP-A-58-26,004, JP-A-59-152,210 and JP-A-8-245,969, processing using a Pd catalyst is exemplified, in removing trace amount of oxygen in argon gas or other gas. However, in these conventional type catalysts, oxygen removal performance is not necessarily sufficient, requiring many amount of a catalyst in many cases, and thus enhancement of catalyst performance has been required. In addition, the conventional type catalysts had a problem that performance is reduced due to generation of thermal deterioration of the catalyst, in using at a relatively high temperature region, for example, under a temperature condition of about 400°C.

### Summary of the Invention

Therefore, it is an object of the present invention to solve the above-described problems of conventional technology, and to provide a catalyst for removing oxygen in gas highly efficiently and stably in from a low temperature region to a relatively high temperature region, in the presence of a reducing substance such as hydrogen or the like, and a method for removing oxygen using the same catalyst.

The present inventors have intensively studied a way to solve the above-described problems and found that highly efficient and stable oxygen removing performance can be maintained in from a low temperature region to a relatively high temperature region, by using a catalyst containing at least one kind of a metal oxide selected from the group consisting of Ti, Si, W, Mo, Zr and Fe, as a catalyst substrate; and at least one kind of a metal selected from the group consisting of Pt, Pd, Rh, Ir, Ru, Ni and Co, and/or a metal oxide thereof, as an activated component, and have thus completed the present invention.

The above various objects can be attained by the following (1) to (21).

(1) A catalyst for removing oxygen comprising: at least one kind of a metal oxide (a catalyst component A) selected from the group consisting of Ti, Si, W, Mo, Zr and Fe; and at least one kind of a metal selected from the group consisting of Pt, Pd, Rh, Ir, Ru, Ni and Co, and/or a metal oxide thereof (a catalyst component B).

(2) The catalyst according to the above (1), wherein the catalyst component A is at least one kind of a metal selected from the group consisting of Ti, Si, W and Mo, and the catalyst component B is at least one kind of a metal selected from the group consisting of Pt, Pd, Rh and Ir, and/or a metal oxide thereof.

(3) The catalyst according to the above (1) or (2), wherein the catalyst component A is a composite oxide or a mixed oxide containing at least Ti.

(4) The catalyst according to the above (3), wherein the catalyst component A is a composite oxide or a mixed oxide of (a) Ti-Mo, (b) Ti-W or (c) Ti-Mo-W.

(5) The catalyst according to the above (1) or (2), wherein the catalyst component A is a composite oxide or a mixed oxide containing at least Ti and Si.

(6) The catalyst according to the above (5), wherein the catalyst component A is a composite oxide or a mixed oxide of (a) Ti-Si-Mo, (b) Ti-Si-w or (c) Ti-Si-Mo-W.

(7) The catalyst according to any one of the above (1) to (6), wherein the catalyst component A is from 95 to 99.99% by mass, as an oxide, in addition, the catalyst component B is from 5 to 0.01% by mass, as a metal and/or a metal oxide, relative to total mass of the catalyst component A and the catalyst component B.

(8) The catalyst according to the above (5), wherein the catalyst component A is a composite oxide of titanium and silicon.

(9) The catalyst according to any one of the above (3) to (8), wherein content of Ti is from 50 to 99% by mass of total of the catalyst component A, as converted to the oxide.

(10) The catalyst according to any one of the above (1) to (9), wherein the catalyst component B has an average particle diameter thereof of from 0.05 to 50 nm.

(11) The catalyst according to any one of the above (1) to (10), wherein the catalyst component B is at least one kind of a metal selected from the group consisting of Pt, Pd, Rh and Ir.

(12) The catalyst according to the above (11), wherein the catalyst component B is at least one kind of a metal selected from the group consisting of Pt and Rh.

(13) The catalyst according to any one of the above (1) to (12), wherein amount of the catalyst component B is distributed on the surface part of depth of T/4 in an inner direction from the outer surface of the catalyst, provided that cross-sectional length of the catalyst is T, is equal to or more than 70% by mol relative to total amount of the catalyst component.

(14) The catalyst according to any one of the above (1) to (13), wherein BET specific surface of the catalyst is from 30 to 250 m²/g.

(15) The catalyst according to any one of the above (1) to (14),wherein catalyst components consisting of the component A and the catalyst component B are supported onto a refractory inorganic carrier.

(16) The catalyst according to any one of the above (1) to (15), wherein the catalyst component A is from 95 to 99.99% by mass, as the oxide, and in addition the catalyst component B is from 5 to 0.1% by mass, as the metal and/or the metal oxide, relative to total mass of the catalyst component A and the catalyst component B.

(17) The catalyst according to any one of the above (1) to (16), wherein supporting amount of the catalyst components per 1 liter of the refractory inorganic carrier is from 20 to 400 g.

(18) The catalyst according to any one of the above (1) to (17), wherein the catalyst component B is supported onto a monolithically molded structure which is composed by the catalyst component A.

(19) The catalyst according to any one of the above (1) to (17), wherein catalyst components consisting of the catalyst component A and the catalyst component B are monolithically molded structure.

(20) A method for removing oxygen characterized by removing oxygen in gas, using the catalyst according to any one of the above (1) to (19), in the presence of a reducing substance.

(21) The method according to the above (20), wherein a reaction is carried out at a temperature of from 0° to 500°C.

### Brief Description of the Drawings

[FIG.1] FIG. 1A is a cross-sectional view showing an example of a catalyst according to the present invention; FIG. 1B is a magnified cross-sectional view along the A-A line of FIG. 1A; and FIG. 1C is a drawing explaining concentration of the catalyst component B according to the present invention.
[FIG. 2] This is a diffraction chart by X-ray of a Ti-Si composite oxide obtained by Example 1.
[FIG. 3] This is a diffraction chart by X-ray of a Ti-W mixed oxide obtained by Example 2.

### Best Mode For Carrying Out The Invention

Explanation will be given below in detail on a catalyst for removing oxygen relevant to the present invention, however, the scope of the present invention is not restricted thereto, and any one other than the following exemplifications can be carried out as appropriate within a range not to impair the scope of the present invention.

The present invention relates to a catalyst for removing oxygen contained in raw material gas such as carbon dioxide for soft drink, hydrogen for a fuel cell, nitrogen, argon, helium, ammonia, carbon monoxide or the like, as water or the like, by subj ecting to a reaction with a reducing substance such as hydrogen or the like.

A catalyst used in the present invention contains the component A: at least one kind of a metal oxide selected from the group consisting of Ti, Si, W, Mo, Zr and Fe; preferably at least one kind of a metal oxide selected from the group consisting of Ti, Si, W and Mo; and most preferably at least one kind of a metal oxide selected from the group consisting of Ti and Si; because a compound other than these compounds provides low oxygen removal efficiency, and inferior durability, in particular, receives poisoning by a compound contained in gas, and is labile to cause temporal deterioration.

A catalyst component B used in the present invention is a catalyst containing at least one kind of a metal selected from the group consisting of Pt, Pd, Rh, Ir, Ru, Ni and Co, and/or a metal oxide thereof; preferably at least one kind of a metal selected from the group consisting of Pt, Pd, Rh and Ir; and most preferably a metal selected from Pt, and/or Rh.

It is because a compound other than these compounds provides low oxygen removal efficiency, and receives poisoning by a compound contained in gas, and causes temporal deterioration.

The catalyst of the present invention contains the catalyst component A in the amount in a range of from 95 to 99.99% by mass, preferably in a range of from 95 to 99.9% by mass, and more preferably in a range of from 95 to 99% by mass, as an oxide, and the catalyst component B in a range of from 5 to 0.01% by mass, preferably in a range of from 5 to 0.1% by mass, and more preferably in a range of from 5 to 1% by mass, as a metal and/or a metal oxide, in total mass of the catalyst component A and the catalyst component B. It should be noted that, as for the catalyst composition, supporting amount of the catalyst component B below 0.01% by mass provides insufficient performance, while the amount even over 5% by mass does not provide comparable enhancement of catalytic activity, but increases cost, and thus it is preferable to be within the above range.

In addition, as for the catalyst component A, not only an elemental substance of oxide of Ti, Si, W, Mo, Zr and Fe, but also a composite oxide or a mixed oxide may be used, however, among these, in particular, one containing Ti is preferable. For example, a composite oxide or a mixed oxide containing at least Ti, specifically Ti-Mo, Ti-W or Ti-Mo-W or the like is included. In addition, a composite oxide or mixed oxide containing at least Ti and Si is included. In addition, at least a composite oxide or a mixed oxide containing at least Ti and Si, for example, a composite oxide or mixed oxide of Ti, Si and W; a composite oxide or mixed oxide of Ti, Si and Mo; a composite oxide or mixed oxide of Ti, Si, Mo and W; or the like is included; therefore, in the case where the catalyst component A is a composite oxide or mixed oxide containing Ti, content of Ti is from 50 to 99% by mass, further preferably from 60 to 95% by mass, particularly preferably from 70 to 90% by mass of total of the catalyst component A, as converted to an oxide, by which a catalyst excellent in oxygen removal performance and durability can be obtained. In addition, in the case where the catalyst component A is a composite oxide or mixed oxide, use of a co-precipitation method, in preparation of the catalyst component A, enhances catalyst performance, and is thus more preferable.

Furthermore, as for the catalyst component B, it is preferable that an average particle diameter thereof of in a range of from 0.05 to 50 nm, more preferably in a range of from 1 to 30 nm, and most preferably in a range of from 1 to 20 nm. It is because, the average particle diameter over 50 nm provides insufficient activity, while the value below 0.05 nm tends to lower activity caused by sintering or the like.

In addition, in the catalyst of the present invention, localization of the catalyst component B at the surface of the catalyst enhances performance, and is thus preferable. "Localization of the catalyst component B at the surface of the catalyst" indicates that the catalyst component B is present only at the surface layer of the catalyst, or a state of being present at the vicinity of the surface layer with a certain degree of distribution region in a depth direction than at the surface layer.

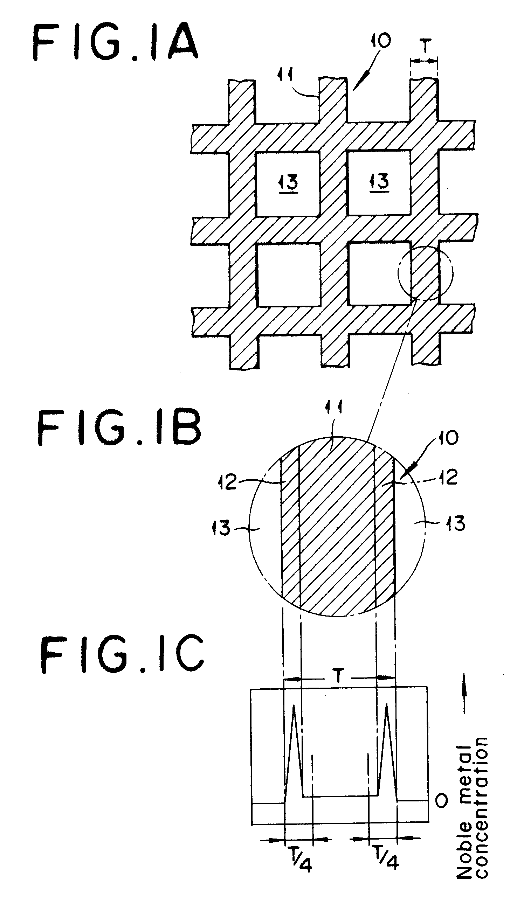

Namely, "localization of the catalyst component at the surface of the catalyst" is not especially limited as long as being a state that the catalyst component is present at the surface of the catalyst, or present at the vicinity of the surface with a certain spread of distribution region in a depth direction than the surface layer, in the resultant catalyst, as a result of supporting the catalyst components onto the surface and/or at the vicinity of the surface of a carrier. Specifically, in the case of the honeycomb-type catalyst 10, as shown in FIGs 1A to 1C, in the porous honeycomb carrier 11 provided with the exhaust gas passage 13, for example, in FIG. 1C, which shows relation between cross-sectional thickness direction of the inner wall part of the honeycomb-type catalyst, and X-ray intensity I of the catalyst component A or the catalyst component B, obtained by continuous measurement (line analysis measurement) on a predetermined catalyst component, at the inner wall part of the honeycomb-type catalyst, from one of the outer surface of the wall part toward the other outer surface, using an electron probe micro analyzer (EPMA) apparatus, provided that integral value of X-ray intensity I in total cross-sectional thickness T of the inner wall part is represented by No, and integral value of X-ray intensity I down to the part 12 of depth of T/4 toward inner direction from the outer surface of the inner wall part is represented by N, it is preferable that 70 s (N/N₀×100), more preferably 75 ≤ (N/N₀×100), and particularly preferably 80 s (N/N₀×100).

As a starting raw material of the catalyst component A, an oxide, a hydroxide, an inorganic salt or an organic salt of each element can be used. Specifically, an ammonium salt, an oxalate, a sulfate, a nitrate, a halide or the like is included; for example, as a Ti-source, an inorganic titanium compound such as titanium tetrachloride, titanyl sulfate or the like, and an organic titanium compound such as tetraisopropyl titanate or the like is included. As a Si-source, silica gel, water glass, silicon tetrachloride or the like; as a W-source, ammonium metatungstate, ammonium paratungstate or the like; and also, as a Mo-source, ammonium paramolybdate, molybdic acid or the like is included.

As a starting raw material of the catalyst component B, a halide such as a chloride or a bromide or the like, an inorganic salt such as a nitrate, a sulfate or the like; various organic salts; an oxide, a complex or the like, of each element is included. In the present invention, as a starting raw material of the catalyst component B, a nitrate salt or an amine complex, or a hydroxide is particularly suitably used.

As for an example of a preferable preparation method for the catalyst relevant to the present invention, explanation will be given below on a catalyst wherein a two-component-based mixed oxide composed of Ti and Mo (a Ti-Mo mixed oxide), or a three-component-based mixed oxide composed of Ti, Si and Mo (a Ti-Si-Mo mixed oxide) is adopted as the catalyst component A, however, the present invention is not limited thereto.

A salt of molybdenum such as ammonium paramolybdate, molybdic acid or the like is dispersed in water, and aqueous ammonia is added. Under stirring of the resulting molybdenum aqueous solution, liquid or an aqueous solution of a water-soluble titanium compound such as titanium tetrachloride, titanyl sulfate, tetraisopropyl titanate or the like is gradually dropped to yield a slurry. This slurry is subjected to filtering, washing and further drying, and subsequently calcinating at a high temperature of preferably from 300° to 600°C, more preferably from 400° to 500°C, to yield the Ti-Mo mixed oxide. In the case of the Ti-Si-Mo mixed oxide, it is obtained by adding silica sol in advance to a mixed solution of molybdenum and ammonia in the above preparation method.

The resultant Ti-Mo mixed oxide powder or Ti-Si-Mo mixed oxide powder is added with a compacting auxiliary agent and suitable amount of water, and kneaded and then it is formed into a honeycomb shape by an extruder. Subsequently it is subjected to sufficient drying at from 50° to 120°C, and then calcinating at from 300° to 750°C, preferably at from 350° to 650°C, for from 1 to 10 hours, preferably from 3 to 8 hours to yield a compacted substance.

It should be noted that, as such a compacting auxiliary agent, starch, carboxymethyl cellulose, hydroxypropylmethyl cellulose, polyethylene glycol or the like is included.

The above honeycomb compacted substance is immersed in an aqueous solution of the catalyst component B for from 0.5 to 200 minutes, preferably from 1 to 100 minutes, and then dried at from 30° to 200°C, preferably from 70° to 170°C, and subsequently calcinated in air at from 350° to 650°C, preferably at from 400° to 550°C, for from 1 to 10 hours, preferably from 3 to 6 hours to yield a completed catalyst. It should be noted that in the case where the catalyst component B contains two or more kinds, they may be supported simultaneously or separately.

A shape of the catalyst relevant to the present invention is not especially limited, however, the catalyst may be used by compacting to a honeycomb shape, a plate shape, a corrugated plate shape, a circular cylinder shape, a cylinder shape, a sphere shape or the like, and preferably to a honeycomb shape. In addition, it may be used by being supported onto a refractory inorganic carrier of a honeycomb shape, a plate shape, a corrugated plate shape, circular cylinder shape, a cylinder shape, a sphere shape or the like, preferably a honeycomb carrier composed of alumina, silica, cordierite, mullite, stainless steel or the like.

Among these, as the shape of the catalyst of the present invention, a honeycomb shape, a circular cylinder shape, or a sphere shape can be particularly suitably used. In the case where the shape of the catalyst is honeycomb-like, a mesh opening of a honeycomb pore is preferably in a range of from 0.5 to 7 mm, more preferably in a range of from 0.8 to 4.5 mm, and further preferably in a range of from 1 to 3 mm. It is because, the mesh opening over 7 mm not only requires more amount of the catalyst due to lowered reaction efficiency but also could lower mechanical strength of the catalyst, while the value below 0.5 mm not only increases pressure loss but also could generate clogging of the catalyst in the case where dust components is contained in treatment object gas. In addition, an inner wall thickness of the honeycomb is preferably in a range of from 0.1 to 2 mm, more preferably in a range of from 0.15 to 1 mm, and further preferably in a range of from 0.2 to 0.5 mm. It is because, the inner wall thickness below 0.1 mm lowers mechanical strength of the catalyst, while the value over 2 mm increases pressure loss. Furthermore, an opening ratio of the honeycomb is preferably in a range of from 45 to 85%, more preferably in a range of from 55 to 80%, and further preferably in a range of from 60 to 75%. It is because, the opening ratio below 45% increases pressure loss, while the value over 85% not only lowers mechanical strength of the catalyst but also requires more amount of the catalyst due to lowered reaction efficiency.

In addition, in the case where the shape of the catalyst is circular cylinder-like, a diameter of the circle is preferably in a range of from 1 to 10 mm, more preferably in a range of from 2 to 7 mm, and further preferably in a range of from 3 to 5 mm. Furthermore, a length of a pillar is preferably in a range of from 1 to 10 mm, more preferably in a range of from 2 to 7 mm, and further preferably in a range of from 3 to 5 mm. It is because, the diameter of the circle and the length of the pillar over 10 mm requires more amount of the catalyst due to lowered reaction efficiency, while the values below 1 mm not only increases pressure loss but also could generate clogging by accumulation of dust in a catalyst layer, in the case where dust components are contained in treatment object gas. In addition, in the case where the shape of the catalyst is sphere-like, a diameter of the sphere is preferably in a range of from 1 to 10 mm, more preferably in a range of from 2 to 7 mm, and further preferably in a range of from 3 to 5 mm. It is because, the diameter of the sphere over 10 mm requires more amount of the catalyst due to lowered reaction efficiency, while the diameter below 1 mm not only increases pressure loss but also could generate clogging by accumulation of dust in a catalyst layer, in the case where dust components are contained in treatment object gas.

A specific surface area of a catalyst influences performance, and usually the specific surface area in a range of from 30 to 250 m²/g (a BET method), more preferably from 40 to 200 m²/g is adopted. The too small specific surface area could provide insufficient catalytic activity, while the too large specific surface area does not enhance catalytic activity as expected but could raise a trouble of such as increased accumulation of catalyst poisoning components or reduced catalytic life. It should be noted that, "specific area" here indicates, in the case where a catalyst is used by being supported onto a carrier composed of alumina, silica, cordierite, mullite, stainless steel or the like, specific surface area determined by excluding the carrier part.

In addition, a pore volume of a catalyst influences performance, and usually the total pore volume determined by a mercury injection method in a range of from 0.1 to 0.7 ml/g, more preferably from 0.2 to 0.6 ml/g, and further preferably from 0.3 to 0.5 ml/g is adopted. The too small pore volume could provide insufficient catalytic activity, while the too large pore volume does not enhance catalytic activity as expected but could raise a trouble of such as reduced mechanical strength of a catalyst or the like. It should be noted that, "pore volume" here indicates, in the case where the catalyst is used by being supported onto a carrier composed of alumina, silica, cordierite, mullite, stainless steel or the like, pore volume determined by excluding the carrier part.

As for a method for removing oxygen using the catalyst of the present invention, oxygen in exhaust gas is removed by contacting the catalyst of the present invention with treatment object gas. Conditions here are not especially limited, and conditions generally used in this kind of reaction can be adopted; specifically the conditions may be determined as appropriate in consideration of kind and property of exhaust gas, oxygen removal ratio required or the like.

It should be noted that a gas temperature at a catalyst entrance, in the case where oxygen is removed using the catalyst of the present invention, is preferably in a range of from 0° to 500°C, more preferably in a range of from 20° to 400°C. It is because, the too low entrance gas temperature leaves oxygen after catalyst treatment in many cases, while the value over 500°C not only could shorten catalyst life but also increases cost in raising gas temperature. In addition, a space velocity here is preferably from 1, 000 to 200, 000 hr⁻¹. It is because, the space velocity below 1,000 hr⁻¹ is inefficient due to requiring many amount of the catalyst, while the value over 200,000 hr⁻¹ cannot provide high oxygen removal ratio. Furthermore, a linear velocity here is preferably from 0.2 to 10 m/sec (normal), more preferably from 0.5 to 5 m/sec (normal), and further preferably from 1 to 3 m/sec (normal). It is because, the linear velocity lower than 0.2 m/sec (normal) requires many amount of the catalyst due to reduced reaction efficiency, while the value higher than 10 m/sec (normal) increases pressure loss.

In addition, as a reducing substance in removing oxygen using the catalyst of the present invention includes hydrogen, hydrocarbon, carbon monoxide, ammonia or the like, however, hydrogen is particularly suitably used. These substances may be charged into treatment object gas for oxygen removal, or those originally included in the gas may be used. A concentration of the reducing substance is equal to or more than two times, preferably equal to or more than 2.5 times theoretical amount necessary to remove oxygen by a reaction with the reducing substance. It is because the concentration below two times may provide insufficient oxygen removal performance in certain cases. In addition, the upper limit of the concentration of the reducing substance is not especially limited in the case where the reducing substance and an objective gas composition are the same, for example, like in the case where oxygen in hydrogen is removed by subjecting to a reaction with hydrogen in gas aiming at purification of hydrogen, however, in the case where a substance different from the objective component is charged as the reducing substance, the concentration of the reducing substance is equal to or lower than 30 times, more preferably equal to or lower than 20 times oxygen concentration. It is because the concentration over 30 times leaves the reducing substance in treated gas and may generate a trouble.

Oxygen treatment efficiency changes depending mainly on catalyst composition, gas temperature at a catalyst entrance, space velocity, ratio of concentration of the reducing substance to oxygen concentration, however, by adjustment within the above conditions, lower oxygen concentration at the catalyst exit can be attained.

### Examples and Comparative Examples

The present invention will be explained specifically below with reference to Examples, however, the present invention is not limited thereto.

### Example 1

### (Catalyst Preparation)

Into a mixed solution of 7.1 kg of silica sol (containing 20% by mass as SiO₂) and 140 kg of ammonia water (containing 10%by mass of NH₃), 60 liter of an aqueous sulfuric acid solution of titanyl sulfate (containing 125 g/liter as TiO₂, and 0.55 kg/liter as H₂SO₄) was gradually dropped under sufficient stirring to generate precipitate. This slurry was subjected to aging, filtering and washing, and subsequently drying at 150°C for 10 hours. The resultant substance was calcined at 500°C for 6 hours, and further crushed using a hammer mill to yield a powder A. The powder A had an average particle diameter of 16 µm. In an X-ray diffraction chart of the powder A, clear characteristic peak derived from TiO₂ or SiO₂ was not confirmed, and thus the powder was confirmed to be a composite oxide of titanium and silicon (a Ti-Si composite oxide) having an amorphous fine structure, shown by a broad diffraction peak (see FIG. 1).

To 2 kg of the above powder A, starch as a compacting auxiliary agent, and water were added and mixed, and kneaded using a kneader. The resultant kneaded substance was further added with water to make slurry using a mixer, to which a honeycomb-type cordierite carrier (with an outer dimension of 150 mm × 150 mm × 50 mm length, a mesh opening of 1.4 mm, and a thickness of 0.4 mm), which was prepared in advance, was immersed. After that, the carrier was pulled up and subjected to drying at 80°C, and calcining at 550°C for 3 hours. Supporting ratio of the Ti-Si composite oxide at this time was 8% by mass.

This supported substance was immersed in an aqueous solution of dinitrodiammine platinum, and then subjected to drying at 150°C for 3 hours, and subsequently calcining at 550°C for 2 hours under air atmosphere to yield a catalyst A. The catalyst A had a composition of (a Ti-Si composite oxide) : Pt=98.5: 1.5 (mass ratio), and BET specific surface excluding a cordierite part was 82 m²/g. In addition, average particle diameter of platinum in this catalyst was 5 nm, and also amount of platinum present down to a part of depth of T/4 in an inner direction from the outer surface of the catalyst, provided that cross-sectional length of the catalyst is T, is equal to or more than 80% by mol relative to total amount of the catalyst component.

### (Performance Evaluation)

An oxygen removal test was carried out using the above catalyst A, under the following conditions.

### Treatment gas composition

Oxygen: 2,000 ppm, hydrogen: 5,000 ppm, and nitrogen: balance Gas temperature at a catalyst entrance: 20°C Space velocity: 50,000 hr⁻¹
After 1 hour from reaction start, gas after catalyst treatment was analyzed using an oxygen analyzer, but oxygen was not detected.

### Comparative Example 1

The oxygen removal test was carried out in the same manner as in Example 1 except that the catalyst was changed to a commercially available general Pt-alumina-cordierite catalyst (a catalyst wherein alumina slurry was supported onto a honeycomb-type carrier with an outer dimension of 150 mm × 150 mm × 50 mm length, a mesh opening of 1.4 mm, and a thickness of 0.4 mm, and platinum was supported thereon) (alumina: Pt=98.5: 1.5, as mass ratio). After 1 hour from reaction start, gas after catalyst treatment was analyzed, and 100 ppm of oxygen was detected.

### Example 2

### (Catalyst Preparation)

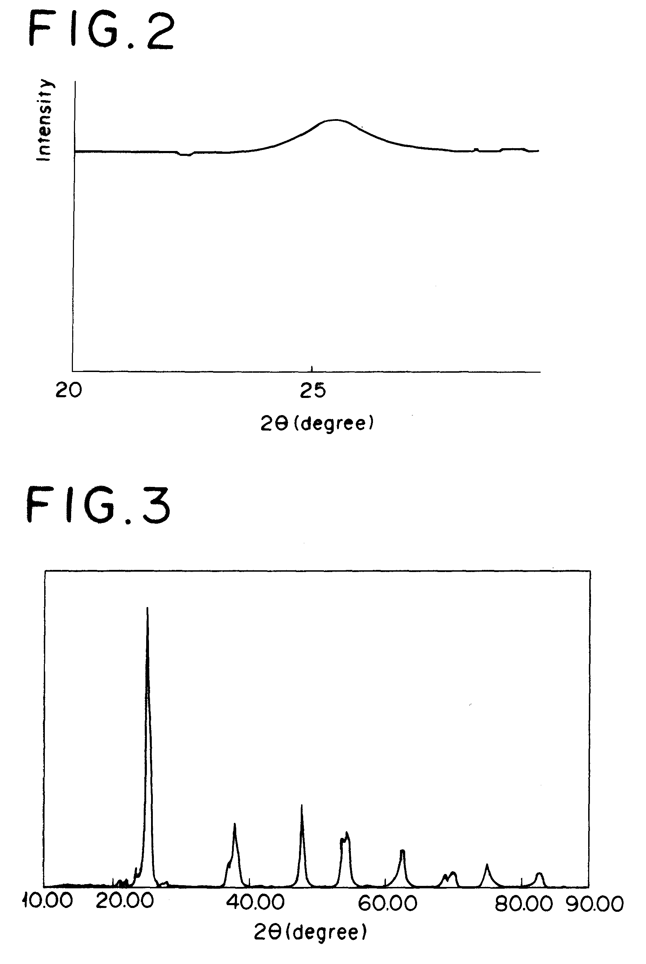

Into a mixed solution of 12 kg of an aqueous solution of ammonium metatungstate (containing 50% by mass as WO₃) into 400 kg of ammonia water (containing 25% by mass of NH₃) and 8 kg of water, 779 liter of an aqueous sulfuric acid solution of titanyl sulfate (containing 70 g/liter as TiO₂, and 310 kg/liter as H₂SO₄) was gradually dropped under sufficient stirring to generate precipitate. This slurry was subjected to aging, filtering and washing, and further drying at 150°C for 10 hours. The resultant substance was calcinated at 600°C for 3 hours, and further crushed using a hammer mill to yield a titanium-tungsten mixed oxide powder B (a Ti-W mixed oxide with an average particle diameter of 19 µm, and TiO₂: WO₃=90: 10, as molar ratio). In an X-ray diffraction chart of the powder B, clear characteristic peak derived from TiO₂ and WO₃ was confirmed at 2θ=23.5° and 2θ=22° (see FIG. 2).

To a mixture of 18 kg of the above powder B and 2 kg of the powder A obtained in Example 1, starch, as a compacting auxiliary agent, and water were added and mixed, and kneaded using a kneader, and subsequently formed into a honeycomb shape with an outer dimension of 150 mm × 150 mm × 50 mm length, a mesh opening of 2.8 mm, and a thickness of 0.5 mm, using an extruder. After that, it was subjected to drying at 80°C, and calcinating at 550°C for 3 hours.

This compact was immersed in a mixed solution of an aqueous solution of palladium nitrate and an aqueous solution of dinitrodiammine platinum, and then subjected to drying at 150°C for 3 hours, and subsequently calcining at 500°C for 2 hours under air atmosphere to yield a catalyst B. The catalyst B had a composition of (a Ti-W mixed oxide) + (a Ti-Si composite oxide) : Pd: Pt=99.7: 0.1: 0.2 (mass ratio), and a BET specific surface area of 95 m²/g. In addition, average particle diameter of platinum and palladium in this catalyst was 4 µm, and also amount of platinum and palladium present down to a part of a depth T/4 in an inner direction from the outer surface of the catalyst, provided that cross-sectional length of the catalyst is T, is equal to or more than 80% by mol relative to total amount of the catalyst component.

### (Performance Evaluation)

An oxygen removal test was carried out using the above catalyst B, under the following conditions.

### Treatment gas composition

Oxygen: 2,000 ppm, hydrogen: balance
Gas temperature at a catalyst entrance: 50°C
Space velocity: 50,000 hr⁻¹
After 1 hour from reaction start, gas after catalyst treatment was analyzed by a similar method as in Example 1, but oxygen was not detected.

### Example 3

### (Catalyst Preparation)

To 2 kg of the above powder B obtained in Example 2, starch, as a compacting auxiliary agent, and water were added and mixed, and kneaded using a kneader. Water was further added to the resultant kneaded substance to make slurry using a mixer, and a honeycomb-type cordierite carrier (with an outer dimension of 150 mm × 150 mm × 50 mm length, a mesh opening of 1.4 mm, and a thickness of 0.4mm), which was prepared in advance, was immersed in the slurry. After that, the carrier was pulled up and subjected to drying at 80°C, and calcining at 550°C for 3 hours. Supporting ratio of the Ti-W mixed oxide at this time was 8% by mass.

This supported substance was immersed in a mixed solution of an aqueous solution of rhodium nitrate and an aqueous solution of dinitrodiammine platinum, and then subjected to drying at 150°C for 3 hours, and subsequently calcining at 500°C for 2 hours under air atmosphere to yield a catalyst C. The catalyst C had a composition of (a Ti-W mixed oxide) : Rh: Pt=98.5: 0.5: 1 (mass ratio), and BET specific surface area excluding a cordierite part was 82 m²/g. In addition, average particle diameter of platinum and rhodium in the catalyst was 6 µm, and also amount of platinum and rhodium present down to a part of a depth T/4 in an inner direction from the outer surface of the catalyst, provided that cross-sectional length of the catalyst is T, is equal to or more than 80% by mol relative to total amount of the catalyst component.

### (Performance Evaluation)

An oxygen removal test was carried out using the above catalyst C, under the following conditions.

### Treatment gas composition

Oxygen: 2,000 ppm, hydrogen: balance
Gas temperature at a catalyst entrance: 200°C
Space velocity: 50,000 hr⁻¹
After 1 hour from reaction start, gas after catalyst treatment was analyzed by a similar method as in Example 1, but oxygen was not detected.

### Example 4

### (Catalyst Preparation)

Into a mixed solution of 121 kg of ammonia water (containing 25% by mass of NH₃) and 86 kg of water, 2.25 kg of molybdic acid powder was added, sufficiently stirred and molybdic acid was completely dissolved to prepare a uniform solution. Into this solution, an aqueous sulfuric acid solution of titanyl sulfate (containing 70 g/liter as TiO₂, and 287 kg/liter as H₂SO₄) was gradually dropped under sufficient stirring to generate precipitate. This slurry was subjected to aging, filtering and washing, and further drying at 100°C for 10 hours. The resultant substance was calcined at 550°C for 4 hours, and further crushed using a hammer mill to yield a titanium-molybdenum mixed oxide powder C (a Ti-Mo mixed oxide with TiO₂: MoO₃=90: 10, as mass ratio).

To 2 kg of the above powder C, starch, as a compacting auxiliary agent, and water were added and mixed, and kneaded using a kneader. Water was further added to the resultant kneaded substance to make slurry using a mixer, and a honeycomb-type cordierite carrier (with an outer dimension of 150 mm × 150 mm × 50 mm length, a mesh opening of 1.4 mm, and a thickness of 0.4 mm), which was prepared in advance, was immersed in the slurry. After that, the carrier was pulled up and subjected to drying at 80°C, and calcining at 550°C for 3 hours. Supporting ratio of the Ti-Mo mixed oxide at this time was 8% by mass.

This carrier substance was immersed in a mixed solution of an aqueous solution of rhodium nitrate and an aqueous solution of dinitrodiammine platinum, and then the carrier was pulled up to be subjected to drying at 150°C for 3 hours, and subsequently calcining at 500°C for 2 hours under air atmosphere to yield a catalyst D. The catalyst D had a composition of (a Ti-Mo mixed oxide): Rh: Pt=98.5: 0.5: 1 (mass ratio), and a BET specific surface, excluding a cordierite part, of 91 m²/g. In addition, average particle diameter of platinum and rhodium in the catalyst was 6 nm, and also amount of platinum and rhodium present down to a part of a depth T/4 in an inner direction from the outer surface of the catalyst, provided that cross-sectional length of the catalyst is T, is equal to or more than 80% by mol relative to total amount of the catalyst component.

### (Performance Evaluation)

An oxygen removal test was carried out using the above catalyst D, under the following conditions.

### Treatment gas composition

Oxygen: 2,000 ppm, hydrogen: 5,000 ppm, and carbon dioxide: balance
Gas temperature at a catalyst entrance: 300°C
Space velocity: 50,000 hr⁻¹
After 200 hours from reaction start, gas after catalyst treatment was analyzed by a similar method as in Example 1, but oxygen was not detected.

### Example 5

### (Catalyst Preparation)

Into a mixed solution of 10 kg of silica sol (containing 30% by mass as SiO₂) and 101.2 kg of ammonia water (containing 25% by mass of NH₃), 2.25 kg of molybdic acid powder was added and stirred sufficiently, and molybdic acid was completely dissolved to prepare a uniform solution. Into this solution, 214 liter of an aqueous sulfuric acid solution of titanyl sulfate (containing 70 g/liter as TiO₂, and 287 g/liter as H₂SO₄) was gradually dropped under sufficient stirring to generate precipitate. This slurry was subjected to aging, filtering and washing, and subsequently drying at 100°C for 10 hours. The resultant substance was calcined at 550°C for 4 hours, and further crushed using a hammer mill to yield a titanium-silicon-molybdenum mixed oxide powder (a Ti-Si-Mo mixed oxide with TiO₂: SiO₂: MoO₃=75: 15: 10, as mass ratio).

To a mixture of 20 kg of the above powder D, starch, as a compacting auxiliary agent, and water were added and mixed, and kneaded using a kneader, and subsequently formed into a honeycomb shape with an outer dimension of 150 mm × 150 mm × 500 mm length, a mesh opening of 2.8 mm, and a thickness of 0.5 mm, using an extruder. After that, it was subjected to drying at 80°C, and calcining at 550°C for 3 hours.

This compact was immersed in a mixed solut ion of an aqueous solution of rhodium nitrate and an aqueous solution of dinitrodiammine platinum, and then subjected to drying at 150°C for 3 hours, and subsequently calcining at 500°C for 2 hours under air atmosphere to yield a catalyst E. The catalyst E had a composition of (a Ti-Si-Mo mixed oxide): Rh: Pt=98.5: 0.5: 1 (mass ratio), and a BET specific surface, excluding a cordierite part, of 118 m²/g. Inaddition, average particle diameter of platinum and rhodium in this catalyst was 5 nm, and also amount of platinum and rhodium present down to a part of a depth T/4 in an inner direction from the outer surface of the catalyst, provided that cross-sectional length of the catalyst is T, is equal to or more than 80% by mol relative to total amount of the catalyst component.

### (Performance Evaluation)

An oxygen removal test was carried out using the above catalyst E, under the following conditions.

### Treatment gas composition

Oxygen: 2,000 ppm, and hydrogen: balance
Gas temperature at a catalyst entrance: 400°C
Space velocity: 50,000 hr⁻¹
After 200 hours from reaction start, gas after catalyst treatment was analyzed by a similar method as in Example 1, but oxygen was not detected.

### Industrial Applicability

The catalyst according to the present invention has the above composition, and thus is capable of removing oxygen highly efficiently and stably in from a low temperature region to a relatively high temperature region. In particular, by presence of a reducing substance in exhaust gas, oxygen can be removed in high efficiency.

## Claims

1. A catalyst for removing oxygen comprising:
at least one kind of a metal oxide (a catalyst component A)
selected from the group consisting of Ti, Si, W, Mo, Zr and Fe; and
at least one kind of a metal selected from the group consisting
of Pt, Pd, Rh, Ir, Ru, Ni and Co, and/or a metal oxide thereof (a catalyst component B).

2. The catalyst according to claim 1, wherein said catalyst component A is at least one kind of a metal selected from the group consisting of Ti, Si, W and Mo, and said catalyst component B is at least one kind of a metal selected from the group consisting of Pt, Pd, Rh and Ir, and/or a metal oxide thereof.

3. The catalyst according to claim 1 or 2, wherein said catalyst component A is a composite oxide or a mixed oxide containing at least Ti.

4. The catalyst according to claim 3, wherein said catalyst component A is a composite oxide or a mixed oxide of (a) Ti-Mo, (b) Ti-W or (c) Ti-Mo-W.

5. The catalyst according to claim 1 or 2, wherein said catalyst component A is a composite oxide or a mixed oxide containing at least Ti and Si.

6. The catalyst according to claim 5, wherein said catalyst component A is a composite oxide or a mixed oxide of (a) Ti-Si-Mo, (b) Ti-Si-W or (c) Ti-Si-Mo-W.

7. The catalyst according to any one of claims 1 to 6, wherein said catalyst component A is from 95 to 99.99% by mass, as an oxide, and in addition said catalyst component B is from 5 to 0.01% by mass, as a metal and/or a metal oxide, relative to total mass of said catalyst component A and said catalyst component B.

8. The catalyst according to claim 5, wherein said catalyst component A is a composite oxide of titanium and silicon.

9. The catalyst according to any one of claims 3 to 8, wherein content of Ti is from 50 to 99% by mass of total of said catalyst component A, as converted to the oxide.

10. The catalyst according to anyone of claims 1 to 9, wherein said catalyst component B has an average particle diameter thereof of from 0.05 to 50 nm.

11. The catalyst according to any one of claims 1 to 10, wherein said catalyst component B is at least one kind of a metal selected from the group consisting of Pt, Pd, Rh and Ir.

12. The catalyst according to claim 11, wherein said catalyst component B is at least one kind of a metal selected from the group consisting of Pt and Rh.

13. The catalyst according to any one of claims 1 to 12, wherein amount of said catalyst component B is distributed on the surface part of a depth T/4 in an inner direction from the outer surface of said catalyst, provided that cross-sectional length of said catalyst is T, is equal to or more than 70% by mol relative to total amount of said catalyst component.

14. The catalyst according to any one of claims 1 to 13, wherein BET specific surface of said catalyst is from 30 to 250 m²/g.

15. The catalyst according to any one of claims 1 to 14, wherein catalyst components consisting of said component A and said catalyst component B are supported onto a refractory inorganic carrier.

16. The catalyst according to any one of claims 1 to 15, wherein said catalyst component A is from 95 to 99.99% by mass, as the oxide, and in addition said catalyst component B is from 5 to 0.1% by mass, as the metal and/or the metal oxide, relative to total mass of said catalyst component A and said catalyst component B.

17. The catalyst according to any one of claims 1 to 16, wherein supporting amount of said catalyst components per 1 liter of said refractory inorganic carrier is from 20 to 400 g.

18. The catalyst according to any one of claims 1 to 17, wherein said catalyst component B is supported onto a monolithically molded structure which is composed by said catalyst component A.

19. The catalyst according to any one of claims 1 to 17, wherein catalyst components consisting of said catalyst component A and said catalyst component B are made by monolithically molded structure.

20. A method for removing oxygen **characterized by** removing oxygen in gas, using the catalyst according to any one of claims 1 to 19, in the presence of a reducing substance.

21. The method according to claim 20, wherein a reaction is carried out at a temperature of from 0° to 500°C.
